# EUROPÄISCHE PATENTANMELDUNG

(11) **EP 1 309 066 A2**
(43) Veröffentlichungstag der Anmeldung: **07.05.2003**
(21) Anmeldenummer: 02023206.2
(22) Anmeldetag: 16.10.2002
(51) Int. Cl.: H02K 1/27

(54) **Rotor für PM-Synchronmaschine**

(30) Priorität: 31.10.2001 DE 10153750
(71) Anmelder: SIEMENS AKTIENGESELLSCHAFT, 80333 München (DE)
(72) Erfinder: Knauff, Axel, 97702 Münnerstadt (DE); Vollmer, Rolf, 36129 Gersfeld (DE)

(57) **Zusammenfassung**

Die Stanzbleche von Rotoren für Synchronmaschinen sollen einfacher gestaltet werden und dabei gleichzeitig verringerte Streuflüsse über die Welle aufweisen. Daher ist in dem Stanzblech (1) eine Vielzahl an in Umfangsrichtung angeordneten Aussparungen (3) vorgesehen, in die jeweils zwei Permanentmagnete (8) einführbar sind und in denen zwischen den Permanentmagneten (8) jeweils ein Zwischenblechsegment (5) angeordnet ist. Dies Aussparungen (3) sind dabei derart geformt, dass bei radial nach außen in der jeweilige Aussparung (3) anliegend eingesetzten Permanentmagneten ein Luftspalt (δₛ) zwischen der radial zum Zentrum weisenden Fläche des Zwischenblechsegments (5) und einer radial vom Zentrum nach außen weisenden Kante der Aussparung (3) besteht. Der Luftspalt (δₛ) gewährt dabei die notwendige Dämpfung des Streuflusses (φₛ) .

## Beschreibung

Die vorliegende Erfindung betrifft einen Rotor für elektrische Maschinen, insbesondere PM-Synchronmaschinen. Konkret betrifft die vorliegende Erfindung eine Stanzblecheinheit für elektrische Maschinen mit einem im Wesentlichen ringförmigen Stanzblech, das im Zentrum eine Öffnung zur Aufnahme einer Welle aufweist, und einer Vielzahl an in Umfangsrichtung angeordneten Aussparungen, in die jeweils einer oder mehrere Permanentmagnete einführbar sind.

Bei einem Rotor einer mit Permanentmagneten erregten Synchronmaschine mit Magneten in Flusskonzentrationsanordnung sind die Permanentmagnete radial in das Rotoreisen eingebettet. Dabei sind die Permanentmagnete tangential mit abwechselnder Richtung magnetisiert. Ein derartiger Rotor ist aus der Patentschrift EP 0 803 962 Al bekannt. Das dort beschriebene Stanzblechpaket des Rotors weist eine Öffnung zur Aufnahme eines hohlzylinderförmigen Halteelements auf. Dieses Halteelement fixiert die Permanentmagnete in den Spalten des Blechpakets. Zur Vermeidung von Streuflüssen sollte dieses Halteelement aus einem amagnetischen Material gefertigt sein. Um ferner die Stabilität des Blechpakets gewährleisten zu können, wird das Blechpaket zwischen zwei Kopplungsflansche geschraubt. Die Bolzen bzw. Schrauben ragen dabei sowohl durch beide Kopplungsflansche als auch durch das Blechpaket.

Bei Rotoren mit Permanentmagneten in Flusskonzentrationsanordnung tritt grundsätzlich das Problem auf, dass über die Welle Streuflüsse φₛ auftreten. Zur Verringerung der Streuflüsse φₛ werden amagnetische Werkstoffe, Luftspalte oder leicht sättigende, dünne, weichmagnetische Verbindungselemente zwischen Permanentmagnet und Welle benutzt. Nachteilig bei derartigen Lösungen sind entweder die hohen Kosten der eingesetzten Materialien, die aufwendige Konstruktion oder der dennoch verbleibende nicht unerhebliche Streufluss.

Die Aufgabe der vorliegenden Erfindung besteht somit darin, bei einfacher Konstruktion des Blechpakets die Streuflüsse über die Welle möglichst gering zu halten.

Erfindungsgemäß wird diese Aufgabe gelöst durch eine Stanzblecheinheit für elektrische Maschinen mit einem im Wesentlichen ringförmigen Stanzblech, das im Zentrum eine Öffnung zur Aufnahme einer Welle aufweist, und einer Vielzahl an in Umfangsrichtung angeordneten Aussparungen, in die jeweils zwei oder mehr Permanentmagnete einführbar sind und in denen zwischen den Permanentmagneten jeweils ein Zwischenblechsegment angeordnet oder anordenbar ist, wobei zumindest eine der Aussparungen derart geformt ist, dass bei in der Aussparung radial außen eingesetzten Permanentmagneten ein Luftspalt zwischen der radial zum Zentrum weisenden Fläche des Zwischenblechsegments und einer radial vom Zentrum nach außen weisenden Kante der Aussparung besteht.

Vorteilhafte Weiterbildungen der erfindungsgemäßen Stanzblecheinheit finden sich in den Unteransprüchen.

In vorteilhafter Weise können damit die in einer Aussparung untergebrachten Permanentmagnete zentrumsseitig magnetisch entkoppelt werden, so dass die dortigen Streuflüsse nur noch eine sehr geringe Rolle spielen.

Die vorliegende Erfindung wird nun anhand der beigefügten Zeichnungen näher erläutert, in denen zeigen:
- FIG 1: eine Draufsicht auf ein Stanzblech gemäß einer ersten Ausführungsform der vorliegenden Erfindung;
- FIG 2: eine Draufsicht auf ein Stanzblech gemäß einer zweiten Ausführungsform der vorliegenden Erfindung;
- FIG 3: eine Draufsicht auf ein Stanzblech gemäß einer dritten Ausführungsform der vorliegenden Erfindung; und
- FIG 4: eine perspektivische Ansicht eines Blechpakets mit Stanzblechen gemäß der dritten Ausführungsform der vorliegenden Erfindung.

Die nachfolgend beschriebenen Ausführungsbeispiele stellen bevorzugte Ausführungsformen der vorliegenden Erfindung dar.

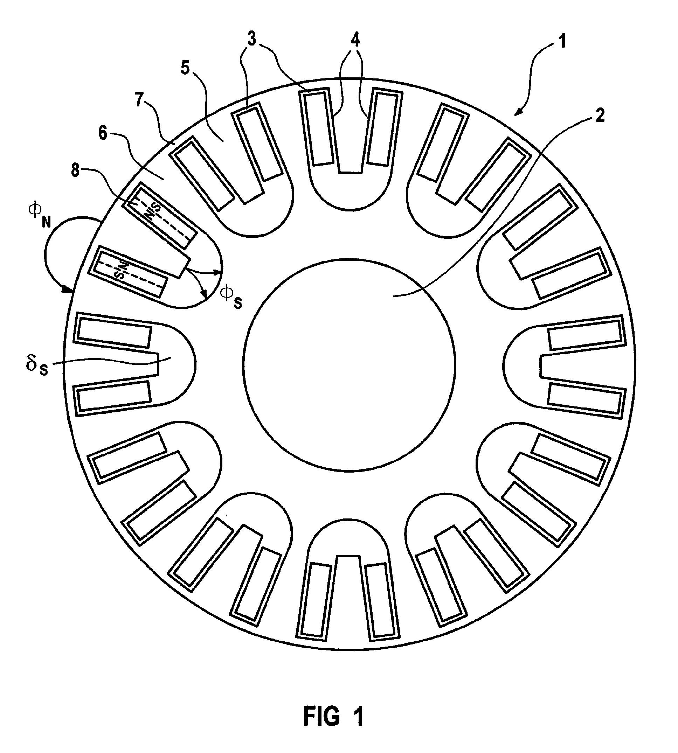

In FIG 1 ist eine Draufsicht auf ein Stanzblech 1 gemäß einer ersten Ausführungsform der vorliegenden Erfindung dargestellt. Das Stanzblech 1 weist im Zentrum eine Öffnung 2 auf, in die die Welle eines Rotors eingebracht werden kann. Darüber hinaus weist das ringförmige Stanzblech 1 gleichmäßig kreisförmig verteilte, U-förmige Ausstanzungen bzw. Aussparungen 3 auf. Die Schenkel 4 der Aussparungen 3 weisen radial nach außen. Zwischen den Schenkeln 4 jeder Aussparung 3 ergeben sich Stanzzungen bzw. Zwischenblechsegmente 5. Zwischen jeweils zwei Aussparungen 3 ergeben sich Blechsegmente, die im Folgenden als Trennblechsegmente 6 bezeichnet werden. Da die Schenkel 4 der Aussparungen 3 nicht bis zur Außenumfangskante des Stanzblechs 1 reichen, besteht an jedem Schenkelkopf ein Verbindungssteg 7, der ein Zwischenblechsegment 5 mit einem Trennblechsegment 6 verbindet.

In FIG 1 ist ferner angedeutet, wie Permanentmagnete 8 in jeden Schenkel der U-förmigen Aussparungen 3 eingebracht werden. Innerhalb einer Aussparung 3 zeigen die Nordpole der in den Schenkeln untergebrachten Permanentmagnete zueinander. Damit entsteht ein Streufluss φₛ von der Spitze des Zwischenblechsegments 5 zu dem inneren Abschnitt des ringförmigen Stanzblechs 1. Da der Streufluss φₛ den Luftspalt δₛ zwischen der Spitze des Zwischenblechsegments 5 und dem Innenabschnitt des Stanzblechs 1 überbrücken muss, ist er sehr gedämpft. Der Nutzfluss φ_{N} kann dagegen in optimaler Weise radial am Außenumfang des Rotors austreten und wieder eintreten, da die Zwischenblechsegmente 5 und Trennblechsegmente 6 radial ausgerichtet sind.

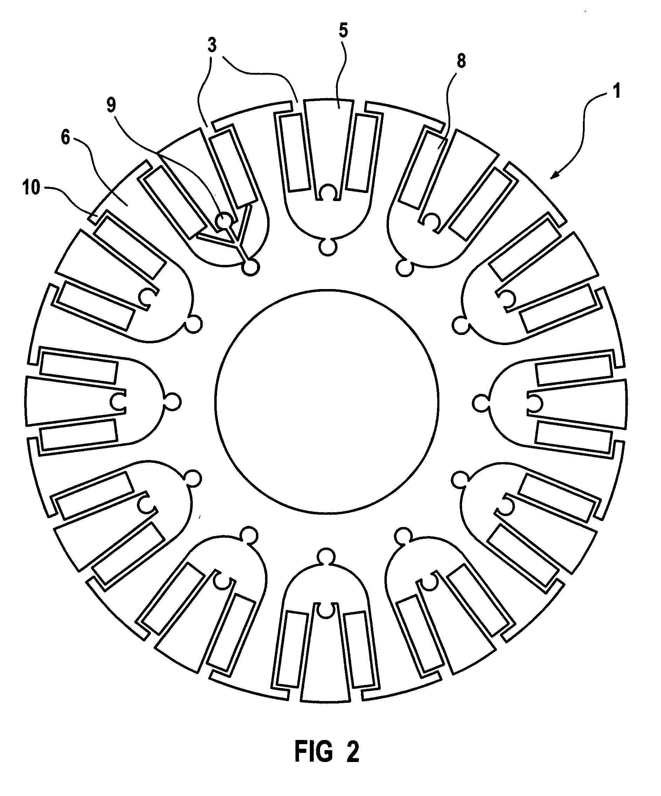

FIG 2 zeigt eine zweite Ausführungsform der vorliegenden Erfindung, bei der die Ausstanzungen 3 radial nach außen offen sind. Auch hier sind die Permanentmagnete 8 in ihrem in die Ausstanzungen 3 montierten Zustand angedeutet.

Die Zwischenblechsegmente 5 sind nicht wie bei der ersten Ausführungsform gemäß FIG 1 tangential durch einen Verbindungssteg 7 mit einem jeweils angrenzenden Trennblechsegment verbunden, d. h. die Zwischenblechsegmente 5 sind nicht Teil des Stanzblechs 1. Jedes Zwischenblechsegment 5 ist daher gegen die Fliehkraft im montierten Zustand durch ein Halteelement 9 gesichert. Das Halteelement 9 greift in eine Ausstanzung in der zentrumsseitigen Stirnfläche des Zwischenblechsegments 5 und in eine Ausstanzung an dem zum Zentrum weisenden Abschnitt der Aussparungen 3. Eine kraftschlüssige Verbindung entsteht dadurch, dass die im Querschnitt kreisförmigen Enden des Halteelements 9 in die kreisförmigen Ausstanzungen des Zwischenblechsegments 5 und des Stanzblechs 1 eingreifen.

Die Permanentmagnete 8 sind gegen die Fliehkraft durch tangentiale Nasen 10 gesichert, die an beiden Seiten jedes Trennblechsegments 6 in der Nähe des Außenumfangs des Stanzblechs 1 angeordnet sind. Damit die Permanentmagnete 8 auch in Zentripetalrichtung gesichert sind, weisen die Halteelemente 9 Arme auf, die die Permanentmagnete 8 radial in jeder Aussparung 3 fixieren.

Die Halteelemente 9 sind für die Montage eines Rotors hilfreich. Sie halten die Permanentmagnete 8 gegenüber den Blechpaketen beim Verkleben in Position. Die Halteelemente 9 haben darüber hinaus die Funktion, die Zwischenblechsegmente von Rotoren, die bei hohen Drehzahlen eingesetzt werden, während des Betriebs zu stabilisieren.

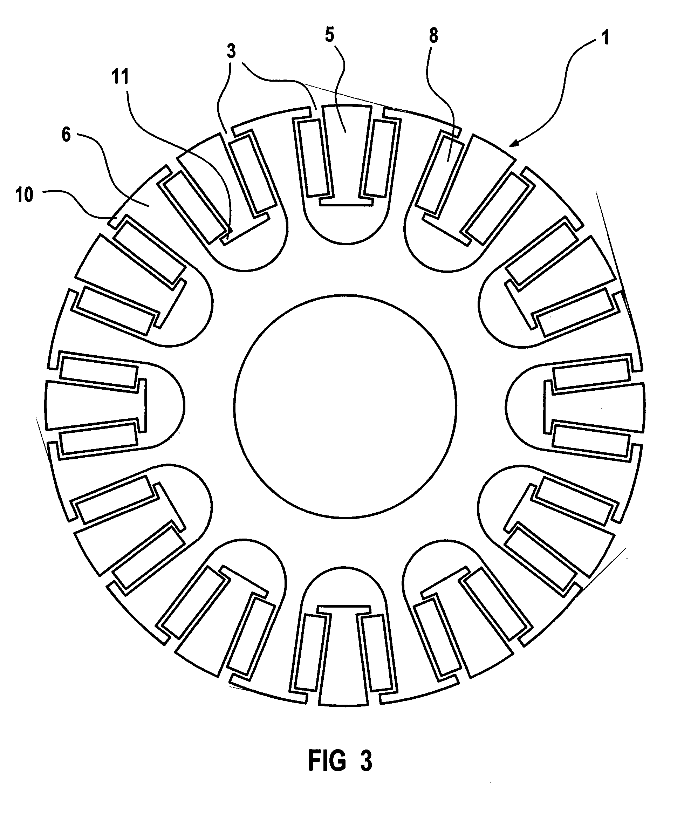

In FIG 3 ist eine dritte Ausführungsform der vorliegenden Erfindung in der Draufsicht schematisch dargestellt.

Das Stanzblech 1 unterscheidet sich von der zweiten Ausführungsform nur darin, dass auf Ausstanzungen für Halteelemente 9 hier verzichtet ist.

Die Permanentmagnete 8 sind wie bei der zweiten Ausführungsform durch Nasen 10 der Trennblechsegmente 6 gegen die Fliehkraft gesichert. Die Zwischenblechsegmente 5, die formschlüssig in einer Aussparung 3 zwischen den Permanentmagneten 8 angeordnet sind, weisen ihrerseits zentrumsseitig tangential ausgerichtete Nasen 11 auf, so dass sie sich gegen die Fliehkraft an den Permanentmagneten 8 abstützen. Auch bei dieser Ausführungsform ist der erfindungsgemäße Luftspalt δₛ zwischen dem Zwischenblechsegment 5 und dem Stanzblech 1 gewährleistet, wobei das Stanzblech 1 eine verhältnismäßig einfache Stanzform aufweist.

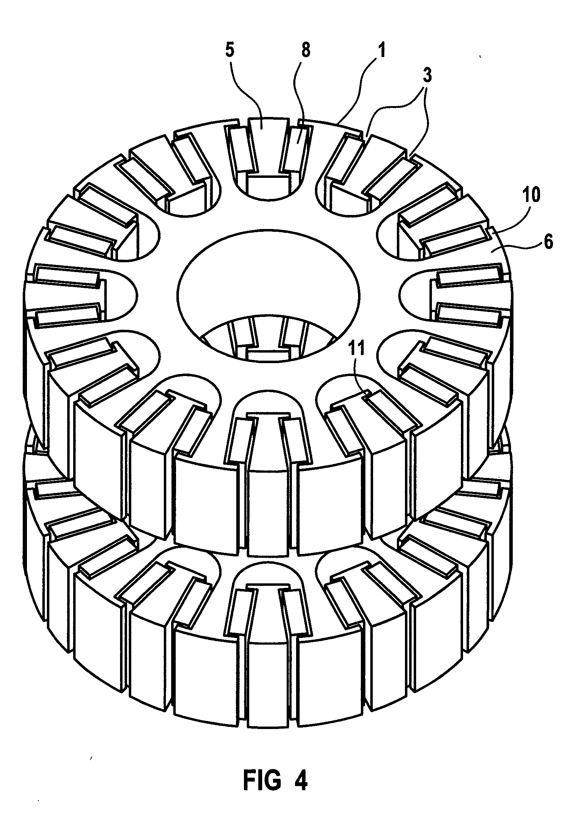

FIG 4 zeigt eine dreidimensionale Darstellung von zwei Blechpaketmodulen, die jeweils aus einem Stapel axial übereinander angeordneter Stanzbleche 1 gemäß der dritten Ausführungsform sowie montierten Permanentmagneten 8 und Zwischenblechsegmenten 5 bestehen. Derartige Blechpaketmodule haben gegenüber rotorspezifischen Blechpaketen mehr Einsatzmöglichkeiten und montagetechnische Vorteile.

Die Blechpaketmodule können dahingehend variiert werden, dass bei jedem x-ten Blech, d. h. vorzugsweise periodisch, die Zwischenblechsegmente 5 wie die Trennblechsegmente 6 ausgebildet sind. Mit derartigen Blechen können die Permanentmagnete 8 in Zentripetalrichtung gestützt werden und gleichzeitig besteht bei einer Vielzahl von Blechen 1 der Luftspalt δₛ, so dass der Streufluss φₛ gering gehalten werden kann.

Derartige axial aneinandergereihte Blechpaketmodule haben außerdem den Vorteil, dass jedes Blechpaketmodul gegenüber einem anderen Blechpaketmodul um einen vorgebbaren Winkel verdreht angeordnet ist, so dass sich über die gesamte axiale Länge der aneinandergereihten Blechpaketmodule, die Wirkung einer Polschrägung einstellt. Damit werden u.a. Nutrastmomente vermieden.

In gleicher Weise können die Stanzbleche der ersten Ausführungsform gemäß FIG 1 mit denen der dritten Ausführungsform gemäß FIG 3 kombiniert werden. Dies hat den Vorteil, dass die Permanentmagnete gegen die Fliehkraft gesichert werden können, ohne dass die gemäß FIG 3 verwendeten Stanzbleche die Nasen 10 aufweisen müssen.

Selbstverständlich lassen sich auch andere unterschiedliche Stanzbleche 1 zu Blechpaketen kombinieren, solange dies technisch sinnvoll ist.

## Patentansprüche

1. Stanzblecheinheit für elektrische Maschinen mit
- einem im Wesentlichen ringförmigen Stanzblech (1), das im Zentrum eine Öffnung (2) zur Aufnahme einer Welle aufweist, und
- einer Vielzahl an in Umfangsrichtung angeordneten Aussparungen (3), in die jeweils mindestens zwei Permanentmagnete (8) einführbar sind und in denen zwischen den Permanentmagneten (8) jeweils ein Zwischenblechsegment (5) angeordnet oder anordenbar ist,
**dadurch gekennzeichnet, dass** zumindest eine der Aussparungen (3) derart geformt ist, dass bei radial nach außen in der jeweilige Aussparung (3) anliegend eingesetzten Permanentmagneten (8) ein Luftspalt (δₛ) zwischen der radial zum Zentrum weisenden Fläche des Zwischenblechsegments (5) und einer radial vom Zentrum nach außen weisenden, der Fläche radial gegenüberliegenden Kante der Aussparung (3) besteht.

2. Stanzblecheinheit nach Anspruch 1, wobei der Luftspalt (δₛ) in mindestens einer der Aussparungen (3) an jede zum Zentrum weisende Fläche der beiden Permanentmagnete (8) angrenzt.

3. Stanzblecheinheit nach Anspruch 1 oder 2, wobei Trennblechsegmente (6), die die Aussparungen (3) voneinander trennen und/oder Zwischenblechsegmente (5), die in Aussparungen Permanentmagnete (8) voneinander trennen, am Außenumfang des Stanzblechs (1) verbunden und insbesondere einteilig mit dem Stanzblech (1) sind.

4. Stanzblecheinheit nach einem der Ansprüche 1 bis 3, wobei mindestens eine der Aussparungen (3) nach außen offen ist und mindestens eine tangential angeordnete Nase (10) aufweist, mit der einer oder mehrere Permanentmagnete (8) in der Aussparung (3) gehalten werden können.

5. Stanzblecheinheit nach Anspruch 4, wobei die Zwischenblechsegmente (5) an dem zum Zentrum weisenden Ende tangentiale Nasen (11) zum Fixieren an den Permanentmagneten (8) aufweisen.

6. Stanzblecheinheit nach einem der Ansprüche 1 bis 5, mit weiterhin mindestens einem in jeweils eine der Aussparungen (3) einsetzbaren Halteelement (9), mit dem die mindestens zwei Permanentmagnete (8) in der Aussparung (3) in Position haltbar sind.

7. Stanzblecheinheit nach Anspruch 6, wobei in mindestens einer der Aussparungen (3) und insbesondere auch in dem Zwischenblechsegment (5) jeweils eine Halteaussparung vorgesehen ist, in die das Halteelement (9) einführbar ist/sind.

8. Stanzblechmodul mit mehreren axial aneinander angeordneten und verbundenen Stanzblecheinheiten nach einem der Ansprüche 1 bis 7.

9. Stanzblechmodul nach Anspruch 8, das eine Kombination mehrerer unterschiedlicher Stanzblecheinheiten umfasst.

10. Stanzblechmodul nach Anspruch 9, wobei in einem oder mehreren, insbesondere in periodisch beanstandeten Stanzblecheinheiten die Zwischenblechsegmente (5) und die Trennblechsegmente (6) gleich ausgestaltet sind.
